# EUROPÄISCHE PATENTSCHRIFT

(11) **EP 2 186 662 B1**
(45) Veröffentlichungstag und Bekanntmachung des Hinweises auf die Patenterteilung: **27.03.2013**
(21) Anmeldenummer: 08169350.9
(22) Anmeldetag: 18.11.2008
(51) Int. Cl.: B60G 17/04, B60G 11/30, B60G 15/12, F16F 9/096

(54) **Dämpfungssystem für Fahrzeuge**
Damping system for vehicles
Système d'amortissement pour véhicules

(43) Veröffentlichungstag der Anmeldung: 19.05.2010
(60) Teilanmeldung: 12178338.5
(73) Patentinhaber: HEMSCHEIDT FAHRWERKTECHNIK GmbH & Co. KG, 42781 Haan-Gruiten (DE)
(72) Erfinder: Runkel, Walter, Dr., 53547 Leubsdorf (DE)
(74) Vertreter: Patentanwälte Dr. Solf & Zapf

(56) Entgegenhaltungen:
- EP-A- 0 052 782
- EP-A- 0 568 042
- EP-A- 0 980 772
- EP-A- 1 437 242
- EP-A- 1 584 502
- EP-B- 0 425 885
- DE-A1- 2 403 017
- DE-A1- 3 330 368
- DE-C1- 19 801 055
- DE-U1- 9 103 359
- JP-A- 2000 135 910

## Beschreibung

Die vorliegende Erfindung betrifft ein Dämpfungssystem für Fahrzeuge gemäß dem Oberbegriff des unabhängigen Anspruchs 1.

Bei solchen Dämpfungssystemen ist in aller Regel in einem Fahrzeug für jedes Rad eine Dämpfereinheit vorhanden.

Ein Dämpfungssystem der im Oberbegriff des Anspruchs 1 definierten Art ist durch das Dokument DE 91 03 359 U1, insbesondere Figuren 4 und 5, bekannt. Dieses Dokument beschreibt ein hydropneumatisches Federungssystem für Radfahrzeuge, bei dem die in einem Fahrzeug als Federzylinder (Federbeine) vorhandenen Kolbenzylindereinheiten in Gruppen unterteilt sind, die aus jeweils mindestens zwei hydraulisch so zusammengeschalteten Kolbenzylindereinheiten bestehen, dass ein Druckausgleich zur Stabilisierung des Fahrzeuges gegen Kippen und Neigen zum Beispiel bei Kurvenfahrten erreicht wird. Die hydraulische Zusammenschaltung soll somit das Fahrverhalten des Fahrzeuges verbessern. In jeder Kolbenzylindereinheit trennt ein Kolben einen ersten Arbeitsraum, und zwar einen Last aufnehmenden, mit Hydraulikmedium gefüllten Zylinderraum von einem zweiten Arbeitsraum, einem eine Kolbenstange umschließenden, ebenfalls mit Hydraulikmedium gefüllten Ringraum. Innerhalb jeder Zylinder-Gruppe sind die Ringräume hydraulisch miteinander sowie mit einem gemeinsamen Federspeicher verbunden, während den Last aufnehmenden Zylinderräumen jeweils ein eigener Federspeicher zugeordnet ist, so dass jeder Kolben mittelbar über das Hydraulikmedium gegen einen Druck eines kompressiblen Federmediums innerhalb des zugehörigen Federspeichers wirkt. Zusätzlich sind die Zylinderräume und somit auch deren zugehörige Federspeicher über ein Drosselventil verbunden. Weiterhin ist zwischen jedem Ringraum und dem zugehörigen Federspeicher ein Dämpfungsventil angeordnet. Durch die Dämpfung bzw. Drosselung des Hydraulikmediums entsteht auf beiden Seiten, das heißt im Dämpfungsmedium sowie auch in dem dem Federmedium zugeordneten Hydraulikmedium, Wärme, die durch Übertragung auf das Federmedium zu nachteiligen Änderungen der Federkennlinie führen kann.

Weiterhin beschreibt auch das Dokument EP 0 425 885 B1 ein hydropneumatisches Federungssystem, wobei eine Kolbenzylindereinheit als Federbein zwischen einer gefederten Masse (Fahrzeugrahmen) und einer ungefederten Masse (Fahrzeugrad) angeordnet ist. Das Federbein ist hydraulisch mit einem hydropneumatischen Federspeicher verbunden, so dass beim Einfedern ein bestimmtes Volumen eines Hydraulikmediums gegen ein kompressibes Federmedium (Druckgas) im Federspeicher verdrängt wird. Das Druckgas wird dadurch komprimiert, und der Gasdruck bewirkt als pneumatische Feder über das dem Federmedium zugeordnete Hydraulikmedium eine Tragkraft im Federbein. Dieses bekannte Federungssystem hat sich in der Praxis recht gut bewährt, und zwar insbesondere in Ausführungen, wobei das Federbein mit zwei Federspeichern so zusammenwirkt, dass ein Kolben des Federbeins beidseitig mit je einem Federdruck beaufschlagt wird. Die Tragkraft resultiert folglich aus der Differenz von zwei gegensinnig auf den Kolben wirkenden Kräften. Allerdings wird dabei zum Dämpfen der Federungsbewegungen das gegen das pneumatische Druckmedium wirkende Hydraulikmedium über ein Dämpfungsventil geführt. Durch die Dämpfung (Drosselung) wird das dem Federmedium zugeordnete Hydraulikmedium aber rasch und zum Teil stark erwärmt. Diese Erwärmung wirkt sich auch auf das Druckgas aus, so dass dessen Druck und damit auch die Tragfederkraft ansteigen. Daraus resultieren je nach Fahrsituation recht ungünstige, variierende Federungs- und Dämpfungseigenschaften.

Die WO 03/106202 A1 beschreibt eine Federungseinrichtung, wobei in einigen Ausführungen eine Dämpfungseinrichtung einen separaten, von dem eigentlichen Federzylinder und dem Federmedium unabhängigen Kreislauf eines hydraulischen Dämpfungsmediums aufweist. Dazu ist mindestens ein separater Dämpfungszylinder mit einem in einem Zylinder relativbeweglich geführten Dämpferkolben sowie mindestens ein hydraulisch mit dem Dämpferzylinder verbundenes Dämpfungsventil erforderlich. Der Kolben des Federzylinders wird über eine von einem Zahnradgetriebe gebildete Antriebseinrichtung angetrieben, die die Schwenkbewegungen eines Rad-Schwingentragarms in lineare Relativbewegungen zwischen Zylinder und Kolben des Federzylinders umsetzt. Dabei soll die Dämpfungseinrichtung mit der gleichen Antriebseinrichtung wie auch der Federzylinder zusammenwirken, wobei aber die Medien, d.h. Federmedium und Dämpfungsmedium, vollständig voneinander getrennt sind. Hintergrund ist, dass dadurch nahezu keine thermische Abhängigkeit besteht, so dass dämpfungsbedingte Erwärmungen des Dämpfungsmediums insoweit unkritisch sind, als davon die Temperatur des Federmediums und somit auch der Druck und die druckabhängige Tragfederkraft praktisch unbeeinflusst bleiben. Diese bekannte Federungs- und Dämpfungseinrichtung hat allerdings einen relativ aufwändigen Aufbau, was sich auch durch ein relativ großes Einbauvolumen und Gewicht bemerkbar macht.

Das Dokument EP 1 584 502 A1 beschreibt eine weitere Federungs- und Dämpfungseinrichtung mit einem recht einfachen Teleskop-Federzylinder, dessen in einem Zylinder beweglich geführter Kolben zur Erzeugung einer lasttragenden Tragfederkraft unmittelbar oder über ein Hydraulikmedium mittelbar gegen ein elastisch kompressibles Federmedium wirkt. Hierbei ist zum Dämpfen ebenfalls ein separater, von dem Federmedium unabhängiger Kreislauf eines hydraulischen Dämpfungsmediums vorgesehen. Dazu trennt der Kolben innerhalb des Zylinders zwei Arbeitsräume voneinander, wobei der erste Arbeitsraum dem Federmedium und der zweite Arbeitsraum dem Dämpfungsmedium zugeordnet sind. Der mit dem Dämpfungsmedium gefüllte zweite Arbeitsraum ist über eine Dämpfungsventilanordnung mit einem Hydraulikbehälter verbunden. Dieser Hydraulikbehälter wird so angeordnet, dass das Dämpfungsmedium schwerkraftbedingt sich in einem unteren Bereich befindet. Oberhalb des Dämpfungsmediums kann Luft mit Atmosphärendruck angeordnet sein. Es kann aber auch vorgesehen sein, diesen Raum oberhalb des Dämpfungsmediums unter einen bestimmten Vorspanndruck zu setzen, um beim Einfedern den Fluss in den zweiten Arbeitsraum hinein zu unterstützen (Beschleunigung der Rückströmung). Dieses bekannte System hat sich gut bewährt, weil es bei konstruktiv einfacher und kompakter Bauweise eine sehr weitreichende thermische Entkoppelung zwischen dem hydraulischen Dämpfungsmedium und dem Federmedium gewährleistet. Da allerdings die beiden Medien nur über den Kolben des Federzylinders voneinander getrennt sind, kann es vor allem bei sehr starker Erwärmung des Dämpfungsmediums doch zu einem geringfügigen Wärmeübergang zum Federmedium kommen.

Der vorliegenden Erfindung liegt die Aufgabe zu Grunde, ein Dämpfungssystem der eingangs beschriebenen Art zu schaffen, mit dem bei weiterhin einfacher und kompakter Bauweise der Komponenten eine weitere Verbesserung der Gebrauchseigenschaften erreicht werden kann.

Erfindungsgemäß wird dies durch die Merkmale des unabhängigen Anspruchs 1 erreicht. Vorteilhafte Ausgestaltungsmerkmale der Erfindung sind in den abhängigen Ansprüchen sowie in der folgenden Beschreibung enthalten.

Demnach ist erfindungsgemäß vorgesehen, dass der erste Arbeitsraum jedes Federzylinders mit dem elastisch kompressiblen Federmedium gefüllt ist, so dass der Kolben zur Erzeugung der Tragfederkraft unmittelbar gegen das kompressible Federmedium wirkt. Vorzugsweise ist jeder erste Arbeitsraum zudem über eine Leitung mit einem zusätzlichen, ebenfalls mit Federmedium gefüllten Federspeicher verbunden.

In einem Fahrzeug mit mehreren Dämpfereinheiten werden nicht alle Dämpfungsventile stets gleich hoch beansprucht, so dass auch die Erwärmung des Dämpfungsmediums nicht gleichmäßig hoch ist. Durch die Verbindung der Dämpfungsventile mit dem gemeinsamen Hydraulikspeicher kann sich das Dämpfungsmedium vorteilhafterweise zwischen den einzelnen Dämpfereinheiten austauschen, so dass durch Temperaturausgleich insgesamt eine vorteilhafte Reduzierung der Temperatur des Dämpfungsmediums erreicht wird. Folglich wird das Dämpfungsmedium ständig zwischen den einzelnen Dämpfereinheiten ausgetauscht (gemischt), was insgesamt eine effektive Kühlwirkung verursacht.

Das erfindungsgemäße Dämpfungssystem kann bevorzugt in Kombination mit hydropneumatischen Federzylindern eingesetzt werden, wobei jede Dämpfereinheit einen Teleskop-Federzylinder aufweist, der aus einem in einem Zylinder relativbeweglich geführten Kolben besteht, der zur Erzeugung einer lasttragenden Tragfederkraft gegen ein elastisch kompressibles Federmedium wirkt. Hierbei kann durch die erfindungsgemäße Kühlwirkung der Federzylinder höher beansprucht werden, da dieser ja insgesamt weniger erwärmt wird. Durch die höhere zulässige Beanspruchung des Federungssystems kann vor allem auch bei Geländefahrzeugen die Fahrleistung erheblich gesteigert werden.

Anhand eines in der Zeichnung veranschaulichten, bevorzugten Ausführungsbeispiels soll die Erfindung genauer erläutert werden. Dabei zeigen:
- Fig. 1: ein Federungssystem für ein Fahrzeug mit beispielhaft drei Federzylindern und mit einem erfindungsgemäßen Dämpfungssystem, wobei alle Komponenten im Längsschnitt dargestellt sind, und
- Fig. 2: eine vergrößerte Teilansicht aus Fig. 1 eines der Federzylinder mit zugehöriger Dämpfereinheit.

In den beiden Figuren der Zeichnung sind gleiche Teile stets mit den gleichen Bezugszeichen versehen.

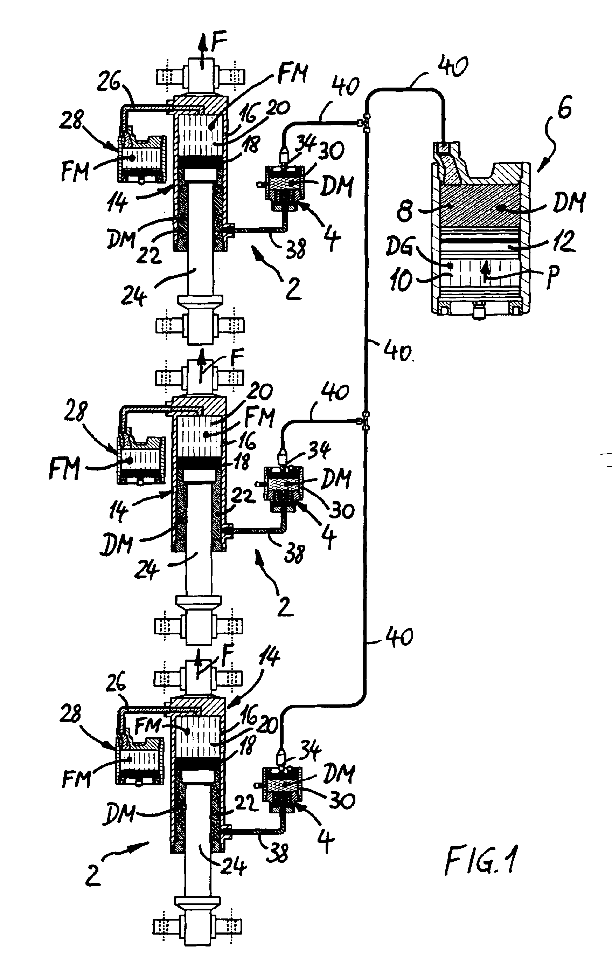

Wie sich zunächst aus Fig. 1 ergibt, besteht ein erfindungsgemäßes Dämpfungssystem aus mindestens zwei Dämpfereinheiten 2 zum Dämpfen von Rad-Federungsbewegungen innerhalb eines Fahrzeuges. In der Regel ist in einem Radfahrzeug jedes Rad mit einer eigenen Dämpfereinheit 2 ausgestattet, so dass ein Vierrad-Fahrzeug auch vier Dämpfereinheiten 2 aufweist, auch wenn in Fig. 1 beispielhaft nur drei Dämpfereinheiten 2 dargestellt sind. Jede Dämpfereinheit 2 weist ein hydraulisches Dämpfungsventil 4 zum Drosseln von - jeweils durch Federungsbewegungen verursachten - Strömungen eines hydraulischen Dämpfungsmediums DM auf.

Dabei sind mindestens zwei, vorzugsweise alle in dem Dämpfungssystem vorhandenen Dämpfungsventile 4 hydraulisch mit einem gemeinsamen Hydraulikspeicher 6 verbunden. Dieser Hydraulikspeicher 6 weist dazu einen Speicherraum 8 für bei Dämpfung der Federungsbewegungen variierende Volumen-Anteile des Dämpfungsmediums DM auf. Vorzugsweise ist das in dem Speicherraum 8 jeweils befindliche Dämpfungsmedium DM mit einem Vorspanndruck p beaufschlagt. In bevorzugter Ausgestaltung weist dazu der Hydraulikspeicher 6 benachbart zu dem Speicherraum 8 einen Druckraum 10 auf, der ein das Dämpfungsmedium DM mit dem Vorspanndruck p beaufschlagendes Druckgas DG enthält. Der Vorspanndruck p des Druckgases DG kann in der Größenordnung von 2 bis 20 bar, insbesondere im Bereich von 3 bis 10 bar liegen. Dieser Vorspanndruck p unterstützt die jeweilige Rückströmung des Dämpfungsmediums DM aus dem Speicherraum 8 zurück über das jeweilige Dämpfungsventil 4. Es ist weiterhin vorteilhaft, wenn der Speicherraum 8 von dem Druckraum 10 über ein Trennelement mediendicht getrennt ist. Im dargestellten Beispiel gemäß Fig. 1 ist als Trennelement innerhalb des zylindrischen Hydraulikspeichers 6 ein frei beweglich (schwimmend) geführter Trennkolben 12 angeordnet. Durch das Trennelement kann der Hydraulikspeicher 6 vorteilhafterweise in beliebiger Raumorientierung angeordnet werden, beispielsweise auch - wie in Fig. 1 dargestellt - so, dass der Speicherraum 8 "oben" und der Druckraum 10 "unten" angeordnet sind.

An dieser Stelle sei bemerkt, dass der Hydraulikspeicher 6 ausschließlich als Reservoir für das zur Dämpfung hin und her strömende Dämpfungsmedium DM fungiert. Dies bedeutet, dass der Hydraulikspeicher 6 ausschließlich dem Dämpfungskreislauf zugeordnet ist und folglich keine Federwirkung zur Rad-Abstützung im Fahrzeug hat.

In weiterer vorteilhafter Ausgestaltung ist aber das Dämpfungssystem praktisch mit einem Federungssystem kombiniert. Dazu ist jede Dämpfereinheit 2 bevorzugt Teil eines Teleskop-Federzylinders 14, der insbesondere zur Anordnung als so genanntes Federbein zwischen einem Fahrzeugrad bzw. einer Radaufhängung und einem Fahrzeugrahmen (nicht dargestellt) vorgesehen ist. Jeder Federzylinder 14 besteht aus einem Zylinder 16 und einem darin linear relativbeweglich geführten Kolben 18, der zur Erzeugung einer lasttragenden Tragfederkraft F gegen ein elastisch kompressibles Federmedium FM wirkt. Bei jedem Federzylinder 14 trennt der Kolben 18 innerhalb des Zylinders 16 zwei Arbeitsräume 20 und 22 mediendicht voneinander; der erste Arbeitsraum 20 ist dem Federmedium FM zugeordnet, während der zweite Arbeitsraum 22 dem hydraulischen Dämpfungsmedium DM zugeordnet ist. Dadurch sind zwei voneinander unabhängige Kreisläufe des Federmediums FM für die Federung und des Dämpfungsmediums DM für die Dämpfung gebildet. Dadurch wird eine weitgehende thermische Unabhängigkeit zwischen den Medien DM und FM erreicht. Der Kolben 18 ist auf einer Kolbenseite mit einer Kolbenstange 24 verbunden, die umfangsgemäß abgedichtet aus dem Zylinder 16 nach außen geführt ist. Dadurch ist einer der zwei Arbeitsräume als ein die Kolbenstange 24 umschließender Ringraum ausgebildet.

In der dargestellten, bevorzugten Ausführung bildet der die Kolbenstange 24 umschließende Ringraum den dem Dämpfungsmedium DM zugeordneten zweiten Arbeitsraum 22, während ein gegenüberliegender Zylinderraum den dem Federmedium FM zugeordneten ersten Arbeitsraum 20 bildet.

Erfindungsgemäß ist jeder erste Arbeitsraum 20 mit dem elastisch kompressiblen Federmedium FM gefüllt und insbesondere über eine Leitung 26 mit einem zusätzlichen, ebenfalls mit Federmedium FM gefüllten Federspeicher 28 verbunden. Das Federmedium FM steht unter einem entsprechend hoch ausgelegten Druck, um durch unmittelbare Beaufschlagung des Kolbens 18 die Tragfederkraft F zu erzeugen.

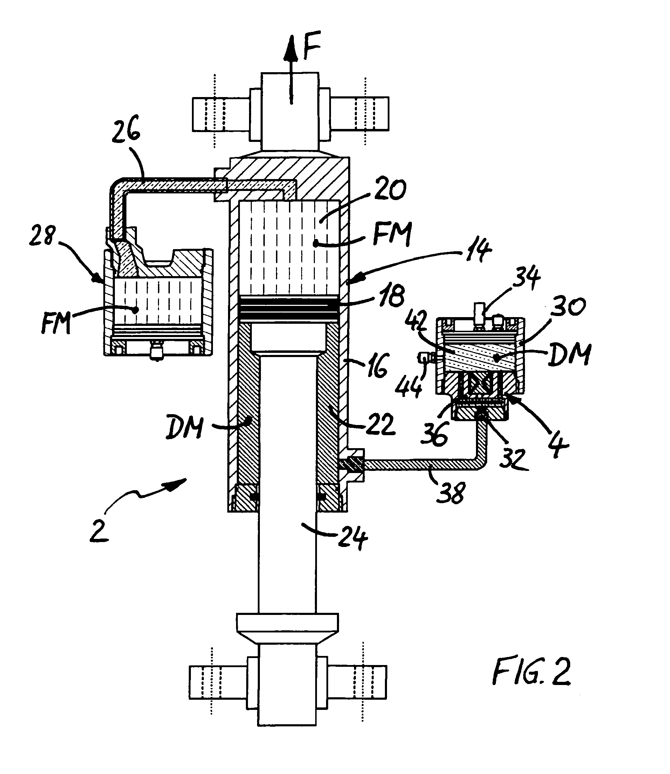

Der zweite Arbeitsraum 22 ist mit dem hydraulischen Dämpfungsmedium DM gefüllt und mit dem zugehörigen Dämpfungsventil 4 verbunden. Das Dämpfungsventil 4 kann außen an oder innen in dem zugehörigen Federzylinder 14 angeordnet sein (nicht dargestellt). In der dargestellten, vorteilhaften Ausgestaltung ist aber jedes Dämpfungsventil 4 als separates Bauteil mit einem eigenen, von dem Federzylinder 14 entfernt anzuordnenden Ventilgehäuse 30 ausgebildet. Hierzu wird insbesondere auf die vergrößerte Darstellung in Fig. 2 verwiesen. Demnach weist das Ventilgehäuse 30 einen mit dem Federzylinder 14 zu verbindenden Eingangsanschluss 32 und einen mit dem Hydraulikspeicher 6 zu verbindenden Ausgangsanschluss 34 auf. Innerhalb des Ventilgehäuses 30 ist zwischen dem Eingangsanschluss 32 und dem Ausgangsanschluss 34 eine Drosselventilanordnung 36 angeordnet. Der Eingangsanschluss 32 jedes Dämpfungsventils 4 ist mit dem zugehörigen Federzylinder 14, und zwar mit dessen zweitem Arbeitsraum 22, über eine Hydraulikleitung 38 verbunden. Die Ausgangsanschlüsse 34 aller Dämpfungsventile 4 sind mit dem gemeinsamen Hydraulikspeicher 6 über Hydraulikleitungen 40 verbunden (siehe Fig. 1). Zumindest die jeweilige zum gemeinsamen Hydraulikspeicher 6 führende Hydraulikleitung 40 ist an dem Dämpfungsventil 4 über eine Hydraulikkupplung (Steckverbindung) lösbar anschließbar. Jedes Dämpfungsventil 4 ist somit als hydraulisch geschlossenes, vollständig mit Dämpfungsmedium DM gefülltes System ausgebildet. Die Drosselventilanordnung 36 ist in der Nähe des Eingangsanschlusses 32 angeordnet, so dass zwischen der Drosselventilanordnung 36 und dem Ausgangsanschluss 34 ein Aufnahmeraum 42 für ein bestimmtes, aber relativ geringes Volumen des Dämpfungsmediums DM gebildet ist. Das Dämpfungsmedium DM kann über einen Füllanschluss 44 in den Aufnahmeraum 42 - und dadurch auch über die Drosselventilanordnung 36 und die Hydraulikleitung 38 in den zweiten Arbeitsraum 22 des Federzylinders 14 - eingefüllt werden.

Jede Drosselventilanordnung 36 besteht aus zwei Teilventilen, und zwar einem ersten Teilventil mit einem relativ höheren Drosselwiderstand für die Strömung des Dämpfungsmediums DM in den Hydraulikspeicher 6 und einem zweiten Teilventil mit einem relativ geringeren Drosselwiderstand für die umgekehrte Strömung aus dem Hydraulikspeicher 6 zurück in den Federzylinder 14. Hierdurch wird in an sich bekannter Weise erreicht, dass die Einfederung des Federzylinders 14 gering gedämpft wird, während die Ausfederung stärker gedämpft wird.

Als Druckgas DG für den Hydraulikspeicher 6 und/oder als Federmedium FM für den Federzylinder 14 und/oder optional für den zusätzlichen Federspeicher 28 wird insbesondere Stickstoff eingesetzt.

Durch die bevorzugt externe, von dem jeweiligen Federzylinder 14 getrennte Anordnung jedes Dämpfungsventils 4 und insbesondere durch die Verbindung der Dämpfungsventile 4 mit dem gemeinsamen Hydraulikspeicher 6 wird eine sehr effektive Kühlung des sich bei Drosselung erwärmenden Dämpfungsmediums DM erreicht. Dadurch wird eine Wärmeübertragung innerhalb des jeweiligen Federzylinders 14 auf das Federmedium FM außerordentlich gering gehalten, so dass das mit dem erfindungsgemäßen Dämpfungssystem ausgerüstete Federungssystem sehr konstante Federungs- und Dämpfungseigenschaften gewährleistet.

## Patentansprüche

1. Dämpfungssystem für Fahrzeuge mit mindestens zwei Dämpfereinheiten (2) zum Dämpfen von Rad-Federungsbewegungen, wobei jede Dämpfereinheit (2) ein hydraulisches Dämpfungsventil (4) zum Drosseln von Strömungen eines hydraulischen Dämpfungsmediums (DM) aufweist, und wobei die mindestens zwei Dämpfungsventile (4) hydraulisch mit einem gemeinsamen Hydraulikspeicher (6) verbunden sind, wobei jede Dämpfereinheit (2) einen Federzylinder (14) aufweist, der einen in einem Zylinder (16) relativbeweglich geführten Kolben (18) aufweist, der zur Erzeugung einer lasttragenden Tragfederkraft (F) gegen ein elastisch kompressibles Federmedium (FM) wirkt, und der innerhalb des Zylinders (16) zwei Arbeitsräume (20, 22) mediendicht voneinander trennt, wobei der erste Arbeitsraum (20) dem Federmedium (FM) und der zweite Arbeitsraum (22) dem hydraulischen Dämpfungsmedium (DM) zugeordnet sind,
**dadurch gekennzeichnet, dass** der erste Arbeitsraum (20) jedes Federzylinders (14) mit dem elastisch kompressiblen Federmedium (FM) gefüllt ist, so dass der Kolben (18) zur Erzeugung der Tragfederkraft (F) unmittelbar gegen das kompressible Federmedium (FM) wirkt.

2. Dämpfungssystem nach Anspruch 1,
**dadurch gekennzeichnet, dass** der Hydraulikspeicher (6) einen Speicherraum (8) für bei Dämpfung der Federungsbewegungen variierende Volumen-Anteile des Dämpfungsmediums (DM) aufweist, wobei das in dem Speicherraum (8) befindliche Dämpfungsmedium (DM) vorzugsweise mit einem Vorspanndruck (p) beaufschlagt ist.

3. Dämpfungssystem nach Anspruch 2,
**dadurch gekennzeichnet, dass** der Hydraulikspeicher (6) benachbart zu dem Speicherraum (8) einen Druckraum (10) mit einem das Dämpfungsmedium (DM) mit dem Vorspanndruck (p) beaufschlagenden Druckgas (DG) aufweist.

4. Dämpfungssystem nach Anspruch 2 oder 3,
**dadurch gekennzeichnet, dass** der Vorspanndruck (p) etwa im Bereich von 2 bis 20 bar, insbesondere im Bereich von 3 bis 10 bar, liegt.

5. Dämpfungssystem nach Anspruch 3 oder 4,
**dadurch gekennzeichnet, dass** der Speicherraum (8) von dem Druckraum (10) über ein Trennelement, insbesondere über einen frei beweglich geführten Trennkolben (12), mediendicht getrennt ist.

6. Dämpfungssystem nach einem der Ansprüche 1 bis 5,
**dadurch gekennzeichnet, dass** derKolben(18)einseitig eine umfangsgemäß abgedichtet aus dem Zylinder (16) nach außen geführte Kolbenstange (24) aufweist, so dass einer der zwei Arbeitsräume (20, 22) als ein die Kolbenstange (24) umschließender Ringraum ausgebildet ist.

7. Dämpfungssystem nach Anspruch 6,
**dadurch gekennzeichnet, dass** der Ringraum den dem Dämpfungsmedium (DM) zugeordneten zweiten Arbeitsraum (22) bildet, während ein gegenüberliegender Zylinderraum den mit dem Federmedium (FM) gefüllten ersten Arbeitsraum (20) bildet.

8. Dämpfungssystem nach einem der Ansprüche 1 bis 7,
**dadurch gekennzeichnet, dass** der mit der Federmedium (FM) gefüllte erste Arbeitsraum (20) jedes Federzylinders (14) über eine Leitung (26) mit einem zusätzlichen, ebenfalls mit dem Federmedium (FM) gefüllten Federspeicher (28) verbunden ist.

9. Dämpfungssystem nach einem der Ansprüche 1 bis 8,
**dadurch gekennzeichnet, dass** der zweite Arbeitsraum (22) mit dem hydraulischen Dämpfungsmedium (DM) gefüllt und mit dem zugehörigen Dämpfungsventil (4) verbunden ist.

10. Dämpfungssystem nach einem der Ansprüche 1 bis 9,
**dadurch gekennzeichnet, dass** zumindest eines der Dämpfungsventile (4) als separates Bauteil mit einem Ventilgehäuse (30) mit einem mit dem Federzylinder (14) verbundenen Eingangsanschluss (32) und einem mit dem Hydraulikspeicher (6) verbundenen Ausgangsanschluss (34) sowie mit einer innerhalb des Ventilgehäuses (30) zwischen dem Eingangsanschluss (32) und dem Ausgangsanschluss (34) angeordneten Drosselventilanordnung (36) ausgebildet ist.

11. Dämpfungssystem nach einem der Ansprüche 1 bis 10,
dad urch gekennzeichnet, d a s s zumindest eines der Dämpfungsventile (4) an oder in dem zugehörigen Federzylinder (14) angeordnet ist.

12. Dämpfungssystem nach einem der Ansprüche 1 bis 11,
**dadurch gekennzeichnet, dass** jedesDämpfungsventil(4) aus zwei Teilventilen besteht, und zwar einem ersten Teilventil mit einem höheren Drosselwiderstand für die Strömung des Dämpfungsmediums (DM) in den Hydraulikspeicher (6) und einem zweiten Teilventil mit einem geringeren Drosselwiderstand für die umgekehrte Strömung aus dem Hydraulikspeicher (6).

13. Dämpfungssystem nach einem der Ansprüche 3 bis 12,
**dadurch gekennzeichnet, dass** dasDruckgas(DG)innerhalb des Hydraulikspeichers (6) Stickstoff ist.

14. Dämpfungssystem nach einem der Ansprüche 1 bis 13,
**dadurch gekennzeichnet, dass** das Federmedium (FM) ein Druckgas, wie insbesondere Stickstoff ist.

## Claims

1. A damping system for vehicles, having at least two damper units (2) for damping wheel suspension motions, wherein each damper unit (2) has an hydraulic damping valve (4) for restricting flows of an hydraulic damping medium (DM), and wherein the at least two damping valves (4) are hydraulically connected to a common hydraulic accumulator (6), wherein each damper unit (2) has a spring cylinder (14) with a piston (18), guided in a cylinder (16) in a relatively movable manner, which acts against a resiliently compressible spring medium (FM) to produce a load-bearing supporting spring force (F) and which within the cylinder (16) separates two working chambers (20, 22) from one another in a media-tight manner, wherein the first working chamber (20) is associated with the spring medium (FM) and the second working chamber (22) is associated with the hydraulic damping medium (DM), **characterised in that** the first working chamber (20) of each spring cylinder (14) is filled with the resiliently compressible spring medium (FM), so that the piston (18) acts directly against the compressible spring medium (FM) to generate the supporting spring force (F).

2. A damping system according to claim 1, **characterised in that** the hydraulic accumulator (6) has a storage chamber (8) for parts by volume, varying upon damping of the suspension motions, of the damping medium (DM), wherein the damping medium (DM) located in the storage chamber (8) is preferably acted upon by a pre-stressing pressure (p).

3. A damping system according to claim 2, **characterised in that** adjacent to the storage chamber (8), the hydraulic accumulator (6) has a pressure chamber (10) with a compressed gas (DG) acting upon the damping medium (DM) with the pre-stressing pressure (p).

4. A damping system according to claim 2 or 3, **characterised in that** the pre-stressing pressure (p) lies substantially in the range from 2 to 20 bar, in particular in the range from 3 to 10 bar.

5. A damping system according to claim 3 or 4, **characterised in that** the storage chamber (8) is separated in a media-tight manner from the pressure chamber (10) via a separating element, in particular via a separating piston (12) guided in a freely movable manner.

6. A damping system according to any one of claims 1 to 5, **characterised in that** the piston (18) has at one side a piston rod (24) guided outwards from the cylinder (16) in a circumferentially sealed manner, so that one of the two working chambers (20, 22) is in the form of an annular chamber surrounding the piston rod (24).

7. A damping system according to claim 6, **characterised in that** the annular chamber forms the second working chamber (22), associated with the damping medium (DM), while an opposite cylinder chamber forms the first working chamber (20), which is filled with the spring medium (FM).

8. A damping system according to any one of claims 1 to 7, **characterised in that** the first working chamber (20), filled with the spring medium (FM), of each spring cylinder (14) is connected via a line (26) to an additional spring accumulator (28), which is likewise filled with the spring medium (FM).

9. A damping system according to any one of claims 1 to 8, **characterised in that** the second working chamber (22) is filled with the hydraulic damping medium (DM) and is connected to the associated damping valve (4).

10. A damping system according to any one of claims 1 to 9, **characterised in that** at least one of the damping valves (4) is in the form of a separate part with a valve housing (30) with an inlet connection (32) connected to the spring cylinder (14) and an outlet connection (34) connected to the hydraulic accumulator (6) as well as with a throttle valve arrangement (36) arranged within the valve housing (30), between the inlet connection (32) and the outlet connection (34).

11. A damping system according to any one of claims 1 to 10, **characterised in that** at least one of the damping valves (4) is arranged on or in the associated spring cylinder (14).

12. A damping system according to any one of claims 1 to 11, **characterised in that** each damping valve (4) consists of two partial valves, namely a first partial valve with a relatively high restricting resistance for the flow of the damping medium (DM) into the hydraulic accumulator (6) and a second partial valve with a relatively low restricting resistance for the reverse flow from the hydraulic accumulator (6).

13. A damping system according to any one of claims 3 to 12, **characterised in that** the compressed gas (DG) within the hydraulic accumulator (6) is nitrogen.

14. A damping system according to any one of claims 1 to 13, **characterised in that** the spring medium (FM) is a compressed gas, such as in particular nitrogen.

## Revendications

1. Système d'amortissement pour véhicules comprenant au moins deux unités d'amortissement (2) servant à amortir des mouvements de suspension de roue, dans lequel chaque unité d'amortissement (2) présente une soupape d'amortissement (4) hydraulique destiné un produire un étranglement des écoulements d'un milieu d'amortissement (DM) hydraulique, et dans lequel les deux soupapes d'amortissement (4) ou plus sont reliées hydrauliquement à un accumulateur hydraulique (6) commun, dans lequel chaque unité d'amortissement (2) présente un vérin de suspension (14) doté d'un piston (18), qui est guidé dans un vérin (16) de manière relativement mobile, qui agit vis-à-vis d'un milieu de suspension (FM) élastiquement compressible afin de générer une force de ressort de suspension (F) et qui sépare l'une de l'autre, à l'intérieur du vérin (16), de manière étanche aux milieux, deux chambres de travail (20, 22), la première chambre de travail (20) étant associée au milieu de suspension (FM) et la deuxième chambre de travail (22) étant associée au milieu d'amortissement (DM) hydraulique,
**caractérisé en ce que** la première chambre de travail (20) de chaque vérin de suspension (14) est remplie d'un milieu de suspension (FM) élastiquement compressible de sorte que le piston (18) agisse directement vis-à-vis du milieu de suspension (FM) compressible afin de produire la force de ressort de suspension (F).

2. Système d'amortissement selon la revendication 1,
**caractérisé en ce que** l'accumulateur hydraulique (6) présente une chambre d'accumulation (8) pour les parties de volume du milieu d'amortissement (DM) variant lors de l'amortissement des mouvements de suspension, dans lequel le milieu d'amortissement (DM) se trouvant dans la chambre d'accumulation (8) est soumis de préférence à l'action d'une pression de précontrainte (p).

3. Système d'amortissement selon la revendication 2,
**caractérisé en ce que** l'accumulateur hydraulique (6) présente, à proximité de la chambre d'accumulation (8), une chambre de compression (10) comprenant un gaz sous pression (DG) soumettant le milieu d'amortissement (DM) à la pression de précontrainte (p).

4. Système d'amortissement selon la revendication 2 ou 3,
**caractérisé en ce que** la pression de précontrainte (p) est comprise de manière approximative dans la plage allant de 2 à 20 bar, en particulier dans la plage allant de 3 à 10 bar.

5. Système d'amortissement selon la revendication 3 ou 4,
**caractérisé en ce que** la chambre d'accumulation (8) est séparée de manière étanche aux fluides de la chambre de compression (10) par l'intermédiaire d'un élément de séparation, en particulier par l'intermédiaire d'un piston de séparation (12) guidé de manière librement mobile.

6. Système d'amortissement selon l'une quelconque des revendications 1 à 5,
**caractérisé en ce que** le piston (18) présente sur un côté une tige de piston (24) guidée vers l'extérieur en dehors du vérin (16) de manière à être étanche périphériquement, de sorte qu'une des deux chambres de travail (20, 22) soit réalisée sous la forme d'un espace annulaire entourant la tige de piston (24).

7. Système d'amortissement selon la revendication 6,
**caractérisé en ce que** l'espace annulaire forme la deuxième chambre de travail (22) associée au milieu d'amortissement (DM), tandis qu'une chambre de vérin opposée forme la première chambre de travail (20) remplie du milieu de suspension (FM).

8. Système d'amortissement selon l'une quelconque des revendications 1 à 7,
**caractérisé en ce que** la première chambre de travail (20) de chaque vérin de suspension (14), remplie du milieu de suspension (FM), est reliée par l'intermédiaire d'une conduite (26) à un accumulateur de suspension supplémentaire (28) également rempli du milieu de suspension (FM).

9. Système d'amortissement selon l'une quelconque des revendications 1 à 8,
**caractérisé en ce que** la deuxième chambre de travail (22) est remplie du milieu d'amortissement (DM) hydraulique et est reliée à la soupape d'amortissement (4) associée.

10. Système d'amortissement selon l'une quelconque des revendications 1 à 9,
**caractérisé en ce qu'**au moins une des soupapes d'amortissement (4) est réalisée sous la forme d'un élément séparé avec un carter de soupape (30) avec un raccordement d'entrée (32) relié au vérin de suspension (14) et un raccordement de sortie (32) relié à l'accumulateur hydraulique (6) ainsi qu'avec un ensemble de soupapes d'étranglement (36) disposé à l'intérieur du carter de soupape (30) entre le raccordement d'entrée (32) et le raccordement de sortie (34).

11. Système d'amortissement selon l'une quelconque des revendications 1 à 10,
**caractérisé en ce qu'**au moins une des soupapes d'amortissement (4) est disposée au niveau du vérin de suspension (14) associé ou dans ce dernier.

12. Système d'amortissement selon l'une quelconque des revendications 1 à 11,
**caractérisée en ce que** chaque soupape d'amortissement (4) est constituée de deux soupapes partielles, à savoir une première soupape partielle présentant une résistance d'étranglement plus élevée pour l'écoulement du milieu d'amortissement (DM) dans l'accumulateur hydraulique (6) et une deuxième soupape partielle présentant une résistance d'étranglement plus faible pour l'écoulement inverse hors de l'accumulateur hydraulique (6).

13. Système d'amortissement selon l'une quelconque des revendications 3 à 12,
**caractérisé en ce que** le gaz sous pression (DG) à l'intérieur de l'accumulateur hydraulique (6) est de l'azote.

14. Système d'amortissement selon l'une quelconque des revendications 1 à 13,
**caractérisé en ce que** le milieu de suspension (FM) est un gaz sous pression tel que notamment l'azote.
